**Europäisches Patentamt**

**European Patent Office**

**Office européen des brevets**

(11) Veröffentlichungsnummer: **0 211 235**
**A1**

# EUROPÄISCHE PATENTANMELDUNG

(21) Anmeldenummer: 86108980.3

(22) Anmeldetag: 02.07.86

(51) Int. Cl.4: **C09J 3/16** , C08G 18/76 , C08G 18/42

(30) Priorität: 08.07.85 DE 3524333

(43) Veröffentlichungstag der Anmeldung:
25.02.87 Patentblatt 87/09

(84) Benannte Vertragsstaaten:
AT BE CH DE FR GB IT LI NL SE

(71) Anmelder: **BASF Aktiengesellschaft**
**Carl-Bosch-Strasse 38**
**D-6700 Ludwigshafen(DE)**

(72) Erfinder: **Bueltjer, Uwe, Dr.**
**Dagobertstrasse 8**
**D-6700 Ludwigshafen(DE)**
Erfinder: **Hummerich, Rainer, Dr.**
**Grosser Riedweg 17**
**D-6520 Worms 27(DE)**
Erfinder: **Kerber, Michael, Dr.**
**Karlsruher Strasse 15**
**D-6940 Weinheim(DE)**

(54) **Polyurethan-Klebstoff-Mischungen.**

(57) Gegenstand der Erfindung sind Polyurethan-Klebstoff-Mischungen oder Polyurethan-Klebstoff-Lösungen, die enthalten:

a) ein Polyurethan-Elastomeres, vorteilhafterweise mit einem mittleren Molekulargewicht von mindestens 30.000, das hergestellt wird durch Umsetzung von

i) mindestens einem im wesentlichen linearen Polyester-Polyol und

ii) einem oder mehreren Kettenverlängerungsmitteln mit

iii) einer Mischung aus 4,4'-und 2,4'-Diphenylmethan-Diisocyanat-Isomeren im Gewichtsverhältnis von 60:40 bis 40:60

und

b) gegebenenfalls Zusatzstoffe und/oder organische Lösungsmittel.

EP 0 211 235 A1

## Polyurethan-Klebstoff-Mischungen

Die Verwendung von weitgehend linearen hydroxylgruppenhaltigen Polyester-Polyurethanen zum Verkleben von weichmacherhaltigen Polyvinylchloriden, Natur-und Synthesakautschuken mit sich selbst und anderen Werkstoffen ist bekannt und wird beispielsweise in der DE-PS 1 256 822 - (GB 1 081 705) beschrieben.

Nachteilig bei diesen Klenstoffen ist eine mangelnde Haftung an insbesondere weichen, transparenten Gummiqualitäten, die nut durch einen aufwendigen, zusätzlichen Arbeitsgang verbessert werden kann. Unter den in der Literatur beschriebenen Vorbehandlungsmethoden der Gummioberfläche seien beispielhaft gennant: Einstreichen der Oberfläche mit oxidierend wirkenden Säuren, wie z.B. Schwefelsäure(DE-PS 807 719), Halogenierung mit Chlor oder Brom abspaltenden Verbindungen (DE-OS 25 50 823 bzw. US 3 991 255) oder Auftragen eines Vorstrichs aus Polychloropren oder anderen halogenhaltigen Polymeren - (US-PS 3 917 742). Durch diese Verfahren lassen sich in der Praxis nur schwer chemische Oberflächenveränderungen der Kautschuke erzielen. Außerdem treten, z.B. bei der Schwefelsäure-und Halogenvorbehandlung, toxische Nebenprodukte auf, die besondere Schutzmaßnahmen erfordern und die Verfahren verteuern.

Zur Beseitigung dieser Nachteile wird in der DE-AS 21 13 631 (US 3 806 486) vorgeschlagen, handelsüblichen Polyester-Polyurethanklebstofflösungen Carbonsäuren einzuverleiben. Durch diese Maßnahme wird ohne aufwendige Vorbehandlung eine beachtliche Haftungsverbesserung an Gummimaterialien erreicht.

Durch Zusatz von Maleinsäure oder Maleinsäureanhydrid kann nach Angaben der DE-PS 1 086 374 (GB 923 085) bei Zweikomponenten-Klebstoffen die Adhäsion des Klebstoffes an - schwer zu verklebenden Materialien verbessert und eine Erhöhung der Viskosität der Polyester-Polyurethankomponente verhindert werden. Nachteilig an diesen Verfahren ist jedoch, daß durch die zugesetzten Carbonsäuren und -derivate die Polyurethane, insbesondere in der Wärme und bei relativ hoher Luftfeuchtigkeit, hydrolytisch gespalten und dadurch die Lagerstabilität der Klebstoffe sowie die Beständigkeit der Verklebung vermindert wird.

Die Verbesserung der Haftung von Polyurethanen an verschiedenen Werkstoffen durch Verwendung von Dihydroxy-polyurethanen, die eingebaute ionische und Carboxylgruppen enthalten, ·wird in der EP-OS 548 beschrieben. Durch den Einbau der ionischen Gruppen wird jedoch nicht nur die Adhäsion des Polyurethan-Klebstoffes verbessert, sondern es verändern sich auch andere Eigenschaften, wie z.B. die Lösungsviskosität und Wärmestandfestigkeit, in nachteiliger Weise.

Speziell die mechanische Beanspruchung in der Wärme führt bei vielen bekannten Klebstoffen aus hochmolekularen Hydroxypolyurethanen zur teilweisen Trennung der Verklebung. Durch die Zugabe von Polyisocyanaten, z.B. Triphenylmethantriisocyanat, zu diesen Klebstoffen läßt sich die Beständigkeit der Klebungen in der Wärme unter Belastung bekanntermaßen erhöhen. Nachteilig an dieser Verfahrensweise ist jedoch, daß die Klebstoffe durch den Polyisocyanatzusatz nur begrenzt haltbar sind. Schon kurz nach der Polyisocyanatzugabe steigt die Viskosität der Klebstofflösung an und spätestens nach einigen Tagen ist die Klebstofflösung irreversibel geliert und damit absolut unbrauchbar. Zudem muß der Klebstoff unmittelbar vor Gebrauch am Ort der Verarbeitung aus zwei Komponenten gemischt werden. Dabei ergeben sich leicht bei kleineren Klebstoffansätzen durch ungenaue Dosierung, bei größeren Ansätzen durch unzureichendes Mischen der Komponenten, Fehlklebungen.

Aus der DE-A-19 30 339 (US 3 674 481) ist bekannt zur Erhöhung der Festigkeit von Verklebungen mit Hydroxypolyurethanen in der Wärme bei der Herstellung des Ausgangspolyadditionsprodukts ein Alkandiol mit mindestens 4 Kohlenstoffatomen als Reaktionskomponente mitzuverwenden. Auf diese Weise gelingt es Hydroxypolyurethanverklebungen ohne Polyisocyanatzusatz in der Wärme unmittelbar nach dem Kleben eine Festigkeit zu geben, die im allgemeinen ausreicht, den von den geklebten Materialien aus wirkenden Kräften zu widerstehen.

Völlig unzureichend erweist sich hingegen die Festigkeit bei zusätzlicher, insbesondere langeinwirkender äußerer mechanischer Beanspruchung der Klebungen in der Wärme. So lösen sich beispielsweise beim Gehen auf sommerlich heißen Straßen Sohlen von den Schuhschäften, auf die sie geklebt sind, oder Klebungen an Polstermöbeln trennen sich im Gebrauch in der Nähe von Heizkörpern. Diese Nachteile lassen sich nicht dadurch beheben, daß man in einfacher Weise die in der DE-A-19 30 339 genannte Menge Alkandiol erhöht. Es resultieren dann nur Polyurethane, die in den für die Klebstoffherstellung üblichen, physiologisch möglichst unbedenklichen Lösungsmitteln ganz oder teilweise unlöslich sind.

Zur Reduzierung der Löslichkeitsprobleme wird in der DE-A-21 61 340 (GB 1 400 756) der Zusatz eines Gemisches aus mindestens zwei Diolen als Kettenverlängerungsmittel jeweils in einer Menge von 0.1 bis 1 Mol pro Mol Polyester-polyol beschrieben. Die Abmischung und Optimierung der Zusammensetzung derartiger Diolgemische im Hinblick auf das Erreichen guter klebetechnischer Eigenschaften ist kompliziert und zeitraubend. Zudem steht nur eine geringe Anzahl billiger Diole zur Verfugung. Die Beimengung technisch wenig genutzter Diole verteuert die Klebstoffrohstoffe zwangsläufig.

Die Aufgabe der vorliegenden Erfindung bestand darin Polyurethan-Klebstoff-Mischungen zu entwickeln, die Verklebungen mit einer verbesserten Wärmestand-und Schälfestigkeit ergeben.

Überraschenderweise wurde gefunden, daß durch die Verwendung von speziellen Mischungen aus 4,4' -und 2,4'-Diphenylmethan-diisocyanat-Isomeren zur Herstellung der Polyurethan-Elastomeren diese Aufgabe gelöst werden kann.

Gegenstand der Erfindung sind daher Polyurethan-Klebstoff-Mischungen, die enthalten

a) ein Polyurethan-Elastomeres, hergestellt durch Umsetzung von

i) mindestens einem im wesentlichen linearen Polyester-polyol und gegebenenfalls

ii) einem oder mehreren Kettenverlängerungsmitteln mit

iii) einer Mischung aud 4,4' -und 2,4' -Diphenylmethan-diisocyanat-Isomeren im Gewichtsverhältnis von 60:40 bis 40:60 und

b) gegebenenfalls Zusatzstoffe und/oder organische Lösungsmittel.

Gegenstand der Erfindung sind ferner Polyurethan-Klebstoff-Lösungen, die bestehen aus

a) dem oben beschriebenen Polyurethan-Elastomeren (a) und

b) mindestens einem organischen Lösungsmittel.

Durch die Verwendung von Mischungen aus 4,4'-und 2,4' -Diphenylmethan-diisocyanat-Isomeren im Gewichtsverhältnis von 60:40 bis 40:60, vorzugsweise von 55:45 bis 45:55 und insbesondere von ungefähr 50:50 können zur Herstellung der erfindungsgemäß verwendbaren Polyurethan-Elastomeren (a) pro Mol Polyester-polyol bis zu 2 Mol Kettenverlängerungsmittel mitverwendet werden, eine Maßnahme, durch die die Schälfestigkeit und insbesondere die Wärmestandfestigkeit der Verklebung verbessert werden kann.

Die Verwendung von 4,4'-und 2,4' -Diphenylmethan-diisocyanat-Isomeren-mischungen mit einem Gehalt von mehr als 60 Gew.% 4,4'-Diphenylmethan-diisocyanat, bezogen auf das Gewicht der Isomerenmischung, führt, in Verbindung mit einem hohen Anteil an Kettenverlängerungsmittel, bezogen auf das Polyesterpolyol, zu Polyurethan-Elastomeren, die in den üblichen, für Klebstofflösungen geeigneten organischen Lösungmitteln nicht oder nur unzureichend löslich sind, während ein Gehalt von über 60 Gew.% 2,4'-Diphenylmethan-diisocyanat Polyurethan-Elastomere mit unzureichender Kristallinität der Hartphase ergibt.

Die erfindungsgemäß verwendbaren Polyurethan-Elastomeren (a) zeigen gegenüber Elastomeren auf der Grundlage von 2,4'-und/oder 2,6-Toluylen-diisocyanat und 4,4'-Diphenylmethan-diisocyanat eine deutlich verbesserte Anfangshaftung und Wärmestandfestigkeit.

Zur Herstellung der Polyurethan-Klebstoff-Mischungen werden zweckmäßigerweise Polyurethan-Elastomere (a) mit einem mittleren Molekulargewicht von mindestens 30.000, vorzugsweise ungefähr 50.000 bus ungefähr 1.000.000, bestimmt nach der Streulichtmethode, verwendet. Derartige Polyurethan-Elastomere können hergestellt werden durch Polyaddition von im wesentlichen linearen Polyester-polyolen, gegebenenfalls Kettenverlängerungsmitteln und Mischungen aus 4,4'-und 2,4'-Diphenylmethan-diisocyanat-Isomeren in den obengenannten Gewichtsverhältnissen.

Im wesentlichen lineare Polyester-polyole im Sinne der Erfindung sind solche mit einer Funktionalität von 2 bis maximal 3, insbesondere von 2 und Molekulargewichten von 1.200 bis 6.000, vorzugsweise von 1.800 bis 4.000, die durch Polykondensation von Alkandicarbonsäuren mit 4 bis 12, vorzugsweise 6 bis 10 kohlenstoffatomen und Alkandiolen mit 2 bis 10, vorzugsweise 4 bis 6 kohlenstoffatomen, oder von geradkettigen Hydroxyalkanmonocarbonsäuren mit mindestens 5 Kohlenstoffatomen, wie z.B. $\epsilon$-Hydroxycapronsäure, sowie durch Polymerisation von Lactonen wie z.B. $\epsilon$-Caprolacton, hergestellt werden. Beispielhaft genannt seien als Alkandicarbonsäuren Bernstein-, Pimelin-, Kork-, Azelain-, Sebacin-und vorzugsweise Adipinsäure und als Alkandiole Ethandiol, Propandiol-1,3, Octan-diol-1,8, Decandiol-1,10 und vorzugsweise Butandiol-1,4, Pentandiol-1,5 und Hexandiol-1,6.

Vorzugsweise verwendet werden Polyesterpolyole hergestellt aus $\epsilon$-Hydroxycapronsäure, $\epsilon$-Caprolacton und insbesondere Adipinsäure und Butandiol-1,4 und/oder Hexandiol-1,6.

Obwohl die Mitverwendung von Kettenverlängerungsmitteln zur Herstellung der Polyurethan-Elastomeren (a) nicht zwingend erforderlich ist, werden diese vorzugsweise mitverwendet zur Verbesserung der Wärmestandfestigkeit der Verklebung. Als Kettenverlängerungsmittel kommen insbesondere Diole oder Diol-Mischungen mit Molekulargewichten von 62 bis 300, vorzugsweise 62 bis 150, in Betracht. Geeignete Diole sind z.B. Esterdiole, wie Terephthalsäure -bis-(2-hydroxyethyl)-ester, Etherdiole, wie Hydrochinon-bis-(2-hydroxyethyl)-ether und vorzugsweise Alkandiole mit 2 bis 8, insbesondere 4 bis 6 Kohlenstoffatomen, wie Ethandiol, Propandiol-1,3, Pentandiol-1,5 und vorzugsweise Butandiol-1,4 und Hexandiol-1,6. Sofern Kettenverlängerungsmittel mitverwendet werden, werden pro Mol Polyester-polyol 0,01 bis 2 Mol, vorzugsweise 0,5 bis 1,8 Mol und insbesondere 1,3 bis 1,6 Mol eines Kettenverlängerungsmittels oder einer Mischung aus zwei oder mehrerer Kettenverlängerungsmitteln, z.B. einer Butandiol-1,4-Hexandiol-1,6-Mischung, eingesetzt. Insbesondere bewährt hat sich als Kettenverlängerungsmittel Butandiol-1,4, so daß dieses bevorzugt verwendet wird.

Die erfindungsgemäß verwendbaren Polyurethan-Elastomeren (a) können in der Schmelze oder in Lösung in Gegenwart von inerten organischen Lösungsmitteln nach dem Prepolymer-und vorzugsweise dem wirtschaftlichen one shot-Verfahren hergestellt werden. Als inerte organische Lösungsmittel eignen sich beispielweise Toluol, Aceton, Methylethylketon, Ethylacetat, Butylacetat, Methylenchlorid, Trichlormethan und Dimethylformamid sowie Mischungen von derartigen Lösungsmitteln. Hierbei werden die Mischungen aus 4,4'-und 2,4'-Diphenylmethan-diisocyanat im Gewichtsverhältnis 60:40 bis 40:60 und Polyester-polyole bzw. vorzugsweise Mischungen aus Polyester-polyolen und Kettenverlängerungsmitteln bei Temperaturen von 20 bis 200°C, vorzugsweise 60 bis 150°C und in Reaktionszeiten von 0,05 bis 4 Stunden, vorzugsweise 0,1 bis 2 Stunden in solchen Mengen zur Reaktion gebracht, daß das Verhältnis von NCO-: OH-Gruppen 0,90 bis 1,10:1, vorzugsweise 1,0 bis 1,05:1 beträgt.

Zur Verwendung als Polyurethan-Klebstoffe können die Mischungen, die enthalten a) ein erfindungsgemäß hergestelltes Polyurethan-Elastomeres und b) gegebenenfalls Zusatzstoffe und/oder organische Lösungsmittel, als Schmelze oder in Form von Lösungen in geeigneten Lösungsmitteln, beispielsweise der obengenannten Art, verarbeitet werden. Bevorzugt werden die Polyurethan-Klebstoffe in Form von Lösungen angewandt, die bestehen aus 5 bis 40 Gew.-Teilen, vorzugsweise 8 bis 20 Gew.-Teilen des Polyurethan-Elastomeren (a) und 95 bis 60 Gew.-Teilen, vorzugsweise 92 bis 80 Gew.-Teilen eines organischen, vorzugsweise eines inerten, polaren organischen Lösungsmittels oder Lösungsmittelgemisches, wie z.B. Aceton, Ethylacetat und/oder vorzugsweise Methylethylketon. Die Viskositat der Polyurethan-Klebstoff-Mischung kann durch Variation der Lösungskonzentration den speziellen Erfordernissen des Klebeverfahrens oder den zu verklebenden Materialien angepaßt werden. Geeignete polyurethan-Klebstoff-Lösungen werden durch einfaches Auflösen des Polyurethan-Elastomeren (a) und gegebenenfalls der Zusatzstoffe (b) in dem organischen Lösungsmittel oder -gemisch bei Raumtemperatur oder mäßig erhöhter Temperatur, beispielsweise bei Temperaturen von 20 bis 40°C, erhalten.

Zur Erzielung spezieller Eigenschaften, z.B. zur Verlängerung der Kontaktbindezeit können den Polyurethan-Klebstoff-Mischungen gegebenenfalls Zusatzstoffe einverleibt werden. Als Zusatzstoffe in Betracht kommen beispielsweise natürliche oder synthetische Harze, wie z.B. Phenolharze, ketonharze, kolophoniumderivate, Phthalatharze, Acetyl- oder Nitrocellulose oder andere Stoffe.

Zur Verarbeitung werden die als Schmelze oder vorzugsweise in Lösung vorliegenden Polyurethan-Klebstoff-Mischungen auf die gegebenenfalls gerauhten oder in anderer Weise vorbehandelten, zu verklebenden Werkstoffoberflächen aufgebracht. Dies kann mit Hilfe einer Walze, Pinsel, Spachtel, Spritzpistole oder einer anderen Vorrichtung geschehen. Die Aufstriche werden nach dem weitgehenden Abdampfen der Lösungsmittel zur Aktivierung auf Temperaturen von ungefähr 50 bis 150°C, vorzugsweise 60 bis 100°C, kurzzeitig erhitzt und anschließend unter einem Preßdruck von ungefähr 0,2 bis 0,6 N/mm² verklebt.

Mit den erfindungsgemäßen Polyurethan-Klebstoff-Mischungen, die vorteilhafterweise in einer Menge von 60 bis 110 g/m² auf die zu verklebende Oberfläche aufgebracht werden, können zahlreiche Werkstoffe, wie z.B. Papier, Pappe, Holz, Holzschliff, Holzspäne, Metall, Leder u.a. mit hoher Festigkeit verklebt werden. Vorzugsweise verwendet werden die erfindungsgemäßen Produkte jedoch zum Verkleben von vulkanisierten und nicht-vulkanisierten Natur-oder Synthesekautschuken bzw. Mischungen von diesen mit Regeneraten. Als Synthesekautschuk kommen beispielsweise die verschiedenen Mischpolymerisate des Butadiens mit Styrol, Acrylnitril, Isobuten sowie Poly-cis-isopren und Poly-cis-butadien in Betracht.

Beispiele 1 bis 9 und Vergleichsbeispiels I bis III

Allgemeine Herstellungsvorschrift

1 Mol Butandiol-1,4-adipat mit einem Molekulargewicht von 2300 wurde mit der genannten Anzahl an Molen Butandiol-1,4 bzw. Hexandiol-1,6 als Kettenverlängerungsmittel vermischt und auf 80°C erwärmt. Bei dieser Tempe ratur wurde das aromatische Diisocyanat hinzugefügt, die Reaktionsmischung 5 bis 9 Minuten gerührt, danach die heiße Schmelze in einen Polyethylenbecher gegossen und 24 Stunden bei 115°C getempert. Nach dem Abkühlen auf Raumtemperatur erhielt man ien festes Polyurethan-Elastomer das als 15 gew.%ige Lösung in Methylethylketon die angegebene Viskosität für die Haupttemperung (HT) aufwies. Die Probe wurde weitere 48 Stunden bei 85°C nachgetempert (NT) und danach die Lösungsviskosität in Methylethylketon erneut bestimmt.

Die und Menge der verwendeten organischen Diisocyanate und die bei 25°C als 15 gew.%ige Lösung in Methylethylketon gemessene Lösungsveskosität sind in Tabelle 1 zusammengefaßt.

Tabelle 1

| Beispiele | Butandiol-1,4--adipat [Mol] | Butan-diol-1,4 [Mol] | Hexan-diol-1,6 [Mol] | Diiso-cyanat [Mol] | 4,4'-/2,4'-Isomeren-verhältnis [Gew.-Teile] | HT [mPa.s] | NT [mPa.s] |
|---|---|---|---|---|---|---|---|
| 1 | 1 | - | - | 1,04 | 50 : 50 | 750 | 1200 |
| 2 | 1 | 0,5 | - | 1,53 | 50 : 50 | 650 | 950 |
| 3 | 1 | 1 | - | 2,03 | 50 : 50 | 600 | 1000 |
| 4 | 1 | 1,5 | - | 2,525 | 50 : 50 | 585 | 775 |
| 5 | 1 | 2,0 | - | 3,00 | 50 : 50 | 1040 | 1150 |
| 6 | 1 | 1,5 | - | 2,57 | 60 : 40 | 950 | 1150 |
| 7 | 1 | 1,5 | - | 2,58 | 42 : 58 | 900 | 1000 |
| 8 | 1 | - | 1,5 | 2,58 | 47 : 53 | 600 | 600 |
| 9 | 1 | - | 2,0 | 3,05 | 50 : 50 | 550 | 600 |

Vergleichs-beispiele

| | | | | | | | |
|---|---|---|---|---|---|---|---|
| I | 1 | 1,5 | | 2,505 | 30 : 70 | unlöslich | |
| II | 1 | 1 | | 2,02 | 100 : 0 | unloslich | |
| III | 1 | - | | 1,02 | 2,4-/2,6-Toluylen-diisocyanatisomeren-gemisch im Gewichts-verhältnis 80:20 | 601 | 769 |

Unter Verwendung der in Tabelle 1 beschriebenen 15 gew.%igen Klebstofflösungen in Methylethylketon wurden die klebetechnischen Eigenschaften der Produkte nach den Beispielen 1 bis 9 und dem Vergleichsbeispiel III geprüft. Entsprechend den europäischen Prüfmethoden für Schuhmaterialien und Schuhklebstoffe wurden folgende Eigenschaften ermittelt:

1) Schälwerte, und zwar die Sofort-Werte sowie 5-Tage-Werte auf Nora in N pro mm

2) Wärmestandfestigkeit (WSF) in °C pro N.

Die gemessenen Werte sind in Tabelle 2 zusammengefaßt.

Tabelle 2

| Beispiel | Schälwert [N/mm] auf Nora | | WSF [°C/N] |
|---|---|---|---|
| | sofort | 5 Tage | |
| 1 | 0,29 | 4,53 | 50/ 0 |
| 2 | 0,39 | 4,69 | 50/ 0 |
| 3 | 0,98 | 4,22 | 50/10 |
| 4 | 1,62 | 5,77 | 60/20 |
| 6 | 1,45 | 3,56 | 50/25 |
| 7 | 0,9 | 1,50 | 50/ 5 |
| 8 | 1,2 | 1,60 | 50/ 5 |
| 9 | 1,4 | 1,9 | 50/10 |
| Vergleichs-beispiel III | 0,16 | 4,29 | 50/ 0 |

## Ansprüche

1. Polyurethan-Klebstoff-Mischungen, enthaltend

a) ein Polyurethan-Elastomeres, hergestellt durch Umsetzung von

i) mindestens einem im wesentlichen linearen Polyester-polyol und gegebenenfalls

ii) einem oder mehreren Kettenverlängerungsmitteln mit

iii) einer Mischung aus 4,4'-und 2,4' - Diphenylmethan-diisocyanat-Isomeren im Gewichtsverhältnis von 60:40 bis 40:60 und

b) gegebenenfalls Zusatzstoffe und/oder organische Lösungsmittel.

2. Polyurethan-Klebstoff-Lösungen, bestehend aus

a) einem Polyurethan-Elastomeren, hergestellt durch Umsetzung von

i) mindestens einem im wesentlichen linearen Polyester-polyol und gegebenenfalls

ii) einem oder mehreren Kettenverlängerungsmitteln mit

iii) einer Mischung aus 4,4'-und 2,4' - Diphenylmethan-diisocyanat-Isomeren im Gewichtsverhältnis von 60:40 bis 40:60

und

b) mindestens einem organischen Lösungsmittel.

3. Polyurethan-Klebstoff-Mischungen nach Anspruch 1, enthaltend ein Polyurethan-Elastomeres - (a) mit einem mittleren Molekulargewicht von mindestens 30.000.

4. Polyurethan-Klebstoff-Mischungen nach Anspruch 1, enthaltend ein Polyurethan-Elastomeres - (a), das unter Vermendung eines linearen Polyester-polyols (i) mit einem Molekulargewicht von 1.200 bis 6.000 hergestellt wurde.

5. Polyurethan-Klebstoff-Mischungen nach Anspruch 1, enthaltend ein Polyurethan-Elastomeres - (a) mit einem mittleren Molekulargewicht von mindestens 30.000, hergestellt unter Verwendung eines Buandiol-1,4 und/oder Hexandiol-1,6-adipats (i) mit einem Molekulargewicht von 1.800 bis 4.000.

6. Polyurethan-Klebstoff-Mischungen nach Anspruch 1, enthaltend ein Polyurethan-Elastomeres - (a), das unter Verwendung eines linearen aliphatischen Diols mit einem Molekulargewicht von 62 bis 300 als Kettenverlängerungsmittel (ii) hergestellt wurde.

7. Polyurethan-Klebstoff-Mischungen nach Anspruch 1, enthaltend ein Polyurethan-Elastomeres - (a), das unter Verwendung von Butandiol-1,4 als Kettenverlängerungsmittel (ii) hergestellt wurde.

8. Polyurethan-Klebstoff-Mischungen nach Anspruch 1, enthaltend ein Polyurethan-Elastomeres -(a), das hergestellt wurde unter Verwendung von bis zu 2 Molen eines oder mehrerer Kettenverlängerungsmitteln (ii) pro Mol Polyester-polyol -(i).

9. Polyurethan-Klebstoff-Meschungen nach Anspruch 1, enthaltend ein Polyurethan-Elastomeres -(a), das hergestellt wurde durch Umsetzung einer Mischung aus einem Mol eines Polyester-polyols -(i) und bis zu 2 Molen eines Kettenverlängerungsmittels (ii) mit einer Mischung aus 4,4'-und 2,4'-Diphenylmethan-diisocyanat-Isomeren im Gewichtsverhältnis 60:40 bis 40:60 im Verhältnis von NCO-: OH-Gruppen von 0,90 bis 1,10:1.

10. Polyurethan-Klebstoff-Lösungen nach Anspruch 2, bestehend aus

a) 5 bis 40 Gew.-Teilen des Polyurethan-Elastomeren (a) und

b) 95 bis 60 Gew.-Teilen eines organischen Lösungsmittels oder Lösungsmittelgemisches.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 093 357 (B.A.S.F.) <br> * Ansprüche 1,3; Spalte 3, Zeilen 6-14,20-32 * | 1,4-8 | C 09 J 3/16 <br> C 08 G 18/76 <br> C 08 G 18/42 |
| X | US-A-3 538 055 (L.T. CAMILLERI et al.) <br> * Ansprüche 1,3; Spalte 3, zeilen 2-35 * | 1,4-8 | |
| X | GB-A-2 137 638 (BOSTIK LTD.) <br> * Ansprüche 1,4-6; Seite 3, Zeilen 2-31; Seite 5, Zeilen 9-17 * | 1-5 | |
| A | FR-A-2 352 846 (BAYER) <br> * Anspruch 1; Seite 3, Zeilen 2-23; Seite 4, Zeilen 15-19 * | 1 | |
| | | | RECHERCHIERTE SACHGEBIETE (Int. Cl.4) |
| A | FR-A-1 401 926 (BAYER) <br> * Zusammenfassung; Seite 1, rechte Spalte, Absatz 2; Seite 2, linke Spalte, Absätze 3,4 * & DE-C-1256822 (Kat. D) | 1 | C 09 J <br> C 08 G |

Der vorliegende Recherchenbericht wurde für alle Patentansprüche erstellt.

| Recherchenort | Abschlußdatum der Recherche | Prüfer |
|---|---|---|
| DEN HAAG | 14-11-1986 | VAN PUYMBROECK M.A. |